(19) **Europäisches Patentamt**
**European Patent Office**
**Office européen des brevets**

(11) **EP 3 447 841 A1**

(12) **EUROPÄISCHE PATENTANMELDUNG**

(43) Veröffentlichungstag:
**27.02.2019 Patentblatt 2019/09**

(51) Int Cl.:
*H01P 3/16* (2006.01)     *G02B 6/14* (2006.01)
*G02B 6/26* (2006.01)

(21) Anmeldenummer: **17187953.9**

(22) Anmeldetag: **25.08.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder:
• **Rosenberger Hochfrequenztechnik GmbH & Co. KG**
**83413 Fridolfing (DE)**

• **Universität Bremen**
**28359 Bremen (DE)**

(72) Erfinder:
• **MEYER, Andre**
**28199 Bremen (DE)**
• **KARAU, Simon**
**28195 Bremen (DE)**
• **SCHNEIDER, Martin**
**49637 Menslage (DE)**

(54) **DIELEKTRISCHER WELLENLEITER**

(57) Dielektrischer Wellenleiter mit wenigstens einer Faser, die wenigstens einen ersten Abschnitt aufweist, welcher eingerichtet ist, ein Signal mit einer maximalen Frequenz, welche kleiner ist als eine erste Grenzfrequenz, zu übertragen und die wenigstens einen zweiten Abschnitt aufweist, welcher eingerichtet ist, ein Signal mit einer maximalen Frequenz, welche kleiner ist als eine zweite Grenzfrequenz, zu übertragen, wobei die zweite Grenzfrequenz kleiner ist als eine erste Grenzfrequenz.

Fig. 1

EP 3 447 841 A1

Printed by Jouve, 75001 PARIS (FR)

**Beschreibung**

GEBIET DER ERFINDUNG

Die vorliegende Erfindung betrifft einen dielektrischen Wellenleiter.

TECHNISCHER HINTERGRUND

Dielektrische Wellenleiter mit Singlemodefasern sind bekannt. Ferner sind dielektrische Wellenleiter mit Multimodefasern bekannt. Diesbezüglich sei beispielsweise auf "The Essence of dielectric waveguides" C.Yeh, F.Shimabukuro, Springer 208 Seiten: 66-76 verwiesen.
Die Verwendung von Singlemode-Wellenleiter ist vorteilhaft, da Modendispersion weitgehend verhindert wird. Jedoch weisen Singlemode-Wellenleiter oft eine höhere Wellenleiterdispersion als Multimode-Wellenleiter auf, wodurch die maximal übertragbare Datenrate reduziert wird.
Dielektrische Multimode-Wellenleiter können eine geringere Wellenleiterdispersion aufweisen als dielektrische Singlemode-Wellenleiter und sind zudem unempfindlicher gegenüber Diskontinuitäten, wie beispielsweise Biegungen. Werden höhere Moden jedoch bei der Einspeisung oder durch Diskontinuitäten angeregt, kommt es zur Modendispersion, welche die maximal übertragbare Datenrate reduziert.

ZUSAMMENFASSUNG DER ERFINDUNG

Vor diesem Hintergrund liegt der vorliegenden Erfindung die Aufgabe zugrunde, einen dielektrischen Wellenleiter anzugeben, welcher die Vorteile von Fasern mit einer höheren Anzahl an Moden mit den Vorteilen von Fasern mit einer niedrigeren Anzahl an Moden verbindet.
Erfindungsgemäß wird diese Aufgabe durch eine Baugruppe mit den Merkmalen des Patentanspruchs 1 und/oder durch ein Verfahren mit den Merkmalen des Patentanspruches 10 gelöst.
Demgemäß ist vorgesehen:

- ein dielektrischer Wellenleiter mit wenigstens einer Faser, die wenigstens einen ersten Abschnitt aufweist, welcher eingerichtet ist, ein Signal mit einer maximalen Frequenz, welche kleiner ist als eine erste Grenzfrequenz, zu übertragen und die wenigstens einen zweiten Abschnitt aufweist, welcher eingerichtet ist, ein Signal mit einer maximalen Frequenz, welche kleiner ist als eine zweite Grenzfrequenz, zu übertragen, wobei die zweite Grenzfrequenz kleiner ist als eine erste Grenzfrequenz.

Wellen, die sich entlang eines dielektrischen Wellenleiters ausbreiten, können je nach Beschaffenheit des Wellenleiters in unterschiedlichen Feldkonfigurationen auftreten. Diese unterschiedlichen Feldkonfigurationen werden als Moden bezeichnet. Wird in einem dielektrischen Wellenleiter nur der Grundmode geführt, spricht man von einem Single-Mode-Wellenleiter. Kann ein dielektrischer Wellenleiter mehrere bzw. höhere Moden führen, spricht man von einem Multimode-Wellenleiter.
Die Bezeichnung "höhere Moden" bezeichnet Moden, deren jeweiligen Grenzen oberhalb der Grenzfrequenz des Modes liegen, in dem die Daten übertragen werden sollen.
Bei der Auslegung eines dielektrischen Wellenleiters ist die von diesem verursachte Dispersion zu berücksichtigen. Dispersion ist die Eigenschaft eines Wellenleiters, dass sich Signalanteile mit unterschiedlichen Geschwindigkeiten im Wellenleiter ausbreiten, wodurch die maximale Datenrate limitiert wird. Bei dielektrischen Wellenleitern treten zwei Arten von Dispersion auf: eine Wellenleiterdispersion und eine Modendispersion.
Wellenleiterdispersion beschreibt die frequenzabhängige Ausbreitungsgeschwindigkeit des Grundmodes, in dem beispielsweise Daten übertragen werden. Wellenleiterdispersion tritt sowohl in Single- als auch in Multimode-Wellenleitern auf.
Die Modendispersion hingegen bezieht sich auf die unterschiedlichen Ausbreitungsgeschwindigkeiten der einzelnen Moden. Multimode-Wellenleiter können eine geringere Wellenleiterdispersion als Single-Mode-Wellenleiter aufweisen. Allerdings wird dieser Vorteil oft aufgrund von Modendispersion abgeschwächt.
Verkoppelt der Mode, in dem die Daten übertragen werden, mit anderen höheren Moden, kann es zu Verzerrungen des Datensignals und zu einer Begrenzung der erreichbaren Datenrate kommen.
Die der vorliegenden Erfindung zugrunde liegende Idee besteht darin, angeregte höhere Moden in einem dielektrischen Wellenleiter zu filtern und/oder zu dämpfen und somit die Modendispersion zu verringern. Somit können die Vorteile von Multimode-Wellenleitern, welche ohne Modendispersion bessere Übertragungseigenschaften aufweisen als Single-Mode-Wellenleiter, besser ausgeschöpft werden.
Zudem kann aufgrund des Modenfilters bei der Auslegung von dielektrischen Wellenleitern ein höherer Freiheitsgrad erreicht werden, da die Berücksichtigung der Modendispersion eine geringere Rolle spielt. So lässt sich beispielsweise bei einem Wellenleiter mit einer kreisrunden Querschnittsfläche eine minimale Wellenleiter Dispersion erreichen, wenn in Kauf genommen wird, dass von diesem Wellenleiter ebenfalls höhere Moden geführt werden können. Die Leistung in den höheren Moden lässt sich durch ein Modenfilter reduzieren, so dass eine dispersionsoptimierte Übertragung realisiert werden kann.

Kern der Erfindung ist es, einen Abschnitt eines dielektrischen Wellenleiters mit einer reduzierten Anzahl von Moden, die in diesem Wellenleiter geführt werden, in einen dielektrischen Wellenleiter mit einer höheren Modenzahl einzufügen.

Vorteilhafte Ausgestaltungen und Weiterbildungen ergeben sich aus den weiteren Unteransprüchen sowie aus der Beschreibung unter Bezugnahme auf die Figuren.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Gemäß einer bevorzugten Weiterbildung der Erfindung ist zwischen dem ersten Abschnitt und dem zweiten Abschnitt ein Übergangsabschnitt ausgebildet, in dem sich die Grenzfrequenz kontinuierlich und/oder stufenförmig von der ersten Grenzfrequenz zu der zweiten Grenzfrequenz ändert.

Übergangsabschnitte zwischen dem ersten Abschnitt und dem zweiten Abschnitt müssen nicht zwingend identisch ausgebildet sein. Beispielsweise kann die Länge der Übergangsabschnitte variabel sein und auch die Länge null aufweisen.

Übergangsabschnitte können auch in gestufter oder teilgestufter Form mit einer beliebigen Anzahl von Stufen realisiert werden.

Ein Teil der höheren Moden wird dann in dem Übergangsabschnitt abgestrahlt.

Gemäß einer bevorzugten Weiterbildung der Erfindung ändert sich die Grenzfrequenz in dem zweiten Abschnitt kontinuierlich und/oder stufenförmig von der ersten Grenzfrequenz zu einer zweiten Grenzfrequenz.

Dementsprechend kann auch der zweite Abschnitt als Übergangsabschnitt ausgebildet sein. Dies ist insbesondere dann vorteilhaft, wenn die höheren Moden bereits durch den Abschnitt, in dem sich die Grenzfrequenz ändert, ausreichend stark reduziert werden.

Gemäß einer bevorzugten Weiterbildung der Erfindung weist die Faser in dem ersten Abschnitt eine Querschnittsfläche auf, die größer ist als eine Querschnittsfläche der Faser in dem zweiten Abschnitt. Somit kann in dem zweiten Abschnitt aufgrund der verringerten Querschnittsfläche eine geringere Anzahl an Moden geführt werden als in dem ersten Abschnitt des Wellenleiters.

Beispielsweise ist es denkbar, bei einer elliptischen oder runden Querschnittsfläche eines Kerns eines Multimode-Wellenleiters, den zweiten Abschnitt durch eine Verjüngung des Querschnitts des Kerns zu realisieren.

Bei einer rechteckigen Multimode-Faser kann der zweite Abschnitt durch eine Reduzierung der Kantenlänge der rechteckigen Querschnittsfläche realisiert werden.

Gemäß einer bevorzugten Weiterbildung der Erfindung verjüngt sich die Faser in dem zweiten Abschnitt und/oder in dem Übergangsabschnitt linear oder nach einem monotonen Teilabschnitt einer Kosinusfunktion.

Bei einem kosinusförmigen Verlauf werden Diskontinuitäten an den Übergangsabschnitten zwischen verschiedenen Abschnitten, d.h. zwischen dem ersten Abschnitt und dem Übergangsabschnitt und/oder dem zweiten Abschnitt, reduziert. Somit werden ungewollte Reflexionen des Grundmodes verringert.

Dabei kann vorgesehen sein, dass der Wellenleiter derart ausgelegt ist, dass sich die Faser in Stufen mit den Längen von einem Viertel bis zur Hälfte der geführten Wellenlänge, bei der Mittenfrequenz des zu übertragenden Signals, verjüngt oder mit den Längen, die um ein Vielfaches der halben Wellenlänge der geführten Welle bei der Mittenfrequenz des zu übertragenden Signals länger sind, verjüngt.

Gemäß einer bevorzugten Weiterbildung der Erfindung weist die Faser in dem ersten Abschnitt eine Permittivität auf, die größer ist als eine Permittivität der Faser des zweiten Abschnitts.

Dies stellt eine weitere Möglichkeit dar, höhere Moden in einem dielektrischen Wellenleiter zu filtern. Ist die Permittivität des zweiten Abschnitts geringer als die des ersten Abschnitts, können in diesem Abschnitt auch bei gleich bleibendem Außendurchmesser weniger Moden geführt werden. Moden, die von dem Wellenleiter nicht geführt werden können, werden abgestrahlt.

Beispielsweise ist es denkbar, dass sich die Permittivität in dem zweiten Abschnitt oder in dem Übergangsabschnitt kontinuierlich oder stückweise ändert. Dies kann z.B. dadurch erreicht werden, dass die Faser in dem zweiten Abschnitt und/oder in dem Übergangsabschnitt dotiert ist und/oder Gaseinschlüsse von einer geringeren Permittivität aufweist. Alternativ können auch andere Materialien beigemischt sein oder die Änderung der Permittivität über eine Änderung der Dichte des Wellenleiters oder über eine Änderung der Kristallisierung des Wellenleiters erreicht werden.

Gemäß einer bevorzugten Weiterbildung der Erfindung ändert sich die Permittivität der Faser des Wellenleiters im Übergangsabschnitt linear oder nach einem monotonen Teilabschnitt einer Kosinus Funktion. Es versteht sich, dass hiervon auch eine stufenförmige Annäherung der genannten kontinuierlichen Verläufe umfasst ist.

Gemäß einer bevorzugten Weiterbildung der Erfindung ändert sich die Permittivität der Faser in Stufen mit den Längen von einem Viertel bis zur Hälfte der geführten Wellenlänge bei der Mittenfrequenz des zu übertragenden Signals, oder mit den Längen, die um ein Vielfaches der halben Wellenlänge der geführten Welle bei der Mittenfrequenz des zu übertragenden Signals länger sind.

Es versteht sich, dass es auch möglich ist, sowohl die Querschnittsfläche der Faser als auch dessen Permittivität zu ändern.

Gemäß einer bevorzugten Weiterbildung der Erfindung ist in dem Bereich des zweiten Abschnittes und/oder des Übergangsabschnittes ein Material vorgesehen, insbesondere in einer den Wellenleiter umgebenden Hülle, welches eingerichtet ist, elektromagnetische Wellen zu absorbieren.

Somit wird verhindert, dass abgestrahlte Moden auf der andern Seite des zweiten Abschnittes erneut in den dielektrischen Wellenleiter eingekoppelt werden. Somit ist es möglich, die Länge des zweiten Abschnittes zu reduzieren. Besonders vorteilhaft ist es, das absorbierende Material in einem Abstand zum Wellenleiter anzubringen, derart dass der Einfluss auf die gewünschten Moden gering ist.

Absorbierendes Material kann beispielsweise Harz oder Kohlenstoff aufweisen.

Gemäß einer bevorzugten Weiterbildung der Erfindung weist ein dielektrischer Wellenleiter eine die Faser umgebende Hülle auf, wobei ein Permittivitätsverhältnis in dem zweiten Abschnitt und/oder in dem Übergangsabschnitt zwischen einer Permittivität der Faser und einer Permittivität der Hülle kleiner als ein Permittivitätsverhältnis in dem ersten Abschnitt zwischen einer Permittivität der Faser und einer Permittivität der Hülle ist.

Anders ausgedrückt bedeutet dies

$$|\varepsilon_r^{Faser} / \varepsilon_r^{Hülle}|_{zweiter\ Abschnitt} < |\varepsilon_r^{Faser} / \varepsilon_r^{Hülle}|_{erster\ Abschnitt}$$

Beispielsweise ist es denkbar, einen Schäumungsgrad einer Hülle zu ändern oder eine konfektionierte Hülle auf einen Wellenleiter aufzuschieben.

Somit kann ein dielektrischer Wellenleiter besonders einfach gefertigt werden, da Modifikationen an der Hülle einfacher zu realisieren sein können als Änderungen an dem signalführenden Teil des Wellenleiters. Zudem kann somit auch die Lagerhaltung vereinfacht werden, da mitunter nur eine Faser mit verschiedenen Hüllen bevorratet werden muss.

Gemäß einer bevorzugten Ausführungsform der Erfindung weist ein Dielektrischer Wellenleiter eine die Faser umgebende Hülle auf, wobei eine Querschnittsfläche der Hülle in dem Übergangsabschnitt und/oder in dem zweiten Abschnitt kleiner ist als eine Querschnittsfläche der Hülle in dem ersten Abschnitt.

Beispielsweise ist es denkbar, dass sich die Querschnittsfläche der Hülle in dem Übergangsabschnitt und/oder in dem zweiten Abschnitt linear verändert.

Somit werden Diskontinuitäten reduziert. Dies verringert Reflexionen der Moden.

Gemäß einer bevorzugten Weiterbildung der Erfindung weist die Faser in dem ersten Abschnitt eine Multimodenfaser auf und in dem zweiten Abschnitt eine Single-Modenfaser.

Auf diese Weise können höhere Moden in einem dielektrischen Wellenleiter besonders effektiv gefiltert werden.

Gemäß einer bevorzugten Weiterbildung der Erfindung weist ein Dielektrischer Wellenleiter einen dritten Abschnitt auf, wobei der zweite Abschnitt zwischen dem ersten Abschnitt und dem dritten Abschnitt ausgebildet ist und insbesondere zwischen dem ersten Abschnitt und dem zweiten Abschnitt und/oder zwischen dem zweiten Abschnitt und dem dritten Abschnitt ein Übergangsabschnitt ausgebildet ist.

Beispielsweise ist es denkbar, einen zweiten Abschnitt zwischen zwei dielektrischen Wellenleitern, die den ersten und den dritten Abschnitt bilden, einzufügen, wobei die dielektrischen Wellenleiter unterschiedliche Materialien oder unterschiedliche Geometrien aufweisen. Insbesondere ist es denkbar, dass ein mit einer Platine verbundener dielektrischer Wellenleiter ein anderes Material und/oder eine andere Geometrie aufweist als der dielektrische Wellenleiter auf der anderen Seite des zweiten Abschnittes.

Dabei kann es vorteilhaft sein, wenn zwischen dem ersten Abschnitt und dem zweiten Abschnitt bzw. zwischen dem zweiten Abschnitt und dem dritten Abschnitt Übergangsabschnitte ausgebildet sind, die individuell auf den ersten und zweiten Abschnitt bzw. auf den zweiten und dritten Abschnitt angepasst sind. Die Übergangsabschnitte müssen dabei nicht identisch sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

INHALTSANGABE DER ZEICHNUNG

Die vorliegende Erfindung wird nachfolgend anhand der in den schematischen Figuren angegebenen Ausführungsbeispiele näher erläutert. Es zeigen dabei:

Fig. 1    zeigt eine schematische Ansicht eines dielektrischen Wellenleiters gemäß einer Ausführungsform der Erfindung;

Fig. 2    zeigt eine schematische Ansicht eines dielektrischen Wellenleiters gemäß einer Ausführungsform der Erfindung;

Fig. 3    zeigt eine schematische Ansicht eines dielektrischen Wellenleiters gemäß einer Ausführungsform der Erfindung;

Fig. 4    zeigt eine schematische Ansicht eines dielektrischen Wellenleiters gemäß einer Ausführungsform der Erfindung;

Fig. 5    zeigt eine schematische Ansicht eines dielektrischen Wellenleiters gemäß einer Ausführungsform der Erfindung;

Fig. 6    zeigt eine schematische Ansicht eines dielektrischen Wellenleiters gemäß einer Ausführungsform der Erfindung;

Fig. 7    zeigt eine schematische Ansicht eines dielektrischen Wellenleiters gemäß einer Ausführungsform der Erfindung;

Fig. 8    zeigt eine schematische Ansicht eines dielektrischen Wellenleiters gemäß einer Ausführungsform der Erfindung;

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen. Im Folgenden werden die Figuren zusammenhängend und übergreifend beschrieben.

BESCHREIBUNG VON AUSFÜHRUNGSBEISPIELEN

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Die Erfindung wird im Folgenden anhand eines Wellenleiterkabels mit einem Kern und mit einer optionalen Hülle beschrieben. Die Erfindung ist jedoch hierauf nicht beschränkt und insbesondere auch auf andere dielektrischen Wellenleiter, beispielsweise zur Verbindung von Chips oder in der THZ-Spektroskopie anwendbar.

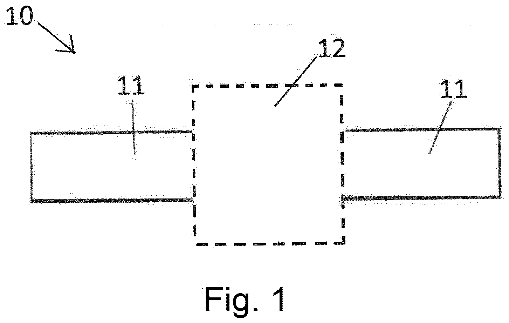

Figur 1 zeigt eine schematische Darstellung eines dielektrischen Wellenleiters 10 gemäß einer Ausführungsform der Erfindung. Der dielektrische Wellenleiter 10 weist einen ersten Abschnitt 11 sowie einen zweiten Abschnitt 12 auf. Der zweite Abschnitt 12 ist eingerichtet gegenüber dem ersten Abschnitt 11 eine reduzierte Anzahl an Moden zu führen.

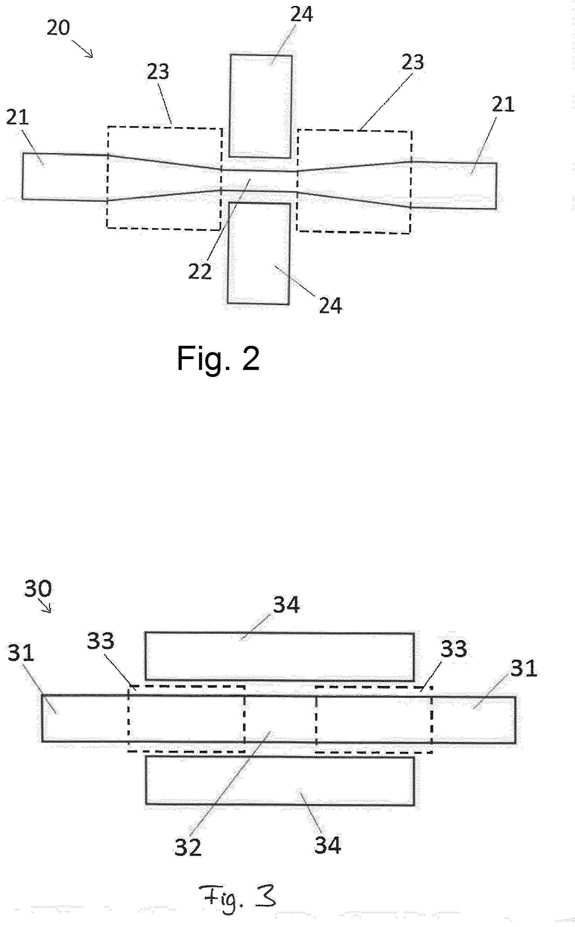

Die Figur 2 zeigt eine schematische Darstellung eines dielektrischen Wellenleiters 20 gemäß einer Ausführungsform der Erfindung. Der dielektrische Wellenleiter 20 weist einen ersten Abschnitt 21, einen zweiten Abschnitt 22 und Übergangsabschnitte 23 zwischen dem ersten Abschnitt 21 und dem zweiten Abschnitt 22 sowie ein elektromagnetische Wellen absorbierendes Material 24 auf. Das elektromagnetische Wellen absorbierende Material 24 ist mittels eines Abstandshalters (nicht dargestellt) derart von dem Kern des dielektrischen Wellenleiters 20 beabstandet, dass bestimmte erwünschte Moden nicht von dem Material 24 absorbiert werden.

Das absorbierende Material 24 ist in dem zweiten Abschnitt des dielektrischen Wellenleiters 20 ausgebildet. Somit wird verhindert, dass in dem Übergangsabschnitt 23 oder in dem zweiten Abschnitt 22 abgestrahlte elektromagnetische Wellen nicht erneut in den Wellenleiter 20 eingekoppelt werden können.

In dem Übergangsabschnitt 23 des Wellenleiters 20 verjüngt sich die Geometrie des Kerns von dem ersten Abschnitt 21 zu der Querschnittsfläche des zweiten Abschnittes. Die Querschnittsfläche in dem zweiten Abschnitt 22 ist konstant. An einem Ende des zweiten Abschnittes 22 ändert sich die Querschnittsfläche des Kerns in dem Übergangsabschnitt 23 linear bis die Querschnittsfläche des ersten Abschnittes erreicht wurde.

Die Figur 3 zeigt eine schematische Darstellung eines dielektrischen Wellenleiters 30 gemäß einer Ausführungsform der Erfindung. Der dielektrische Wellenleiter 30 weist einen ersten Abschnitt 31, einen zweiten Abschnitt 32 sowie Übergangsabschnitte 33, die zwischen dem ersten Abschnitt 31 und dem zweiten Abschnitt 32 ausgebildet sind, auf. Der dielektrische Wellenleiter 30 weist in dem ersten Abschnitt 31 bzw. in dem zweiten Abschnitt 32 eine konstante Permittivität von $\varepsilon_r^1$ bzw. $\varepsilon_r^2$ auf. Die Permittivität $\varepsilon_r^1$ im ersten Abschnitt 31 ist dabei größer als die Permittivität $\varepsilon_r^2$ im zweiten Abschnitt 32. Die Permittivität des dielektrischen Wellenleiters 30 verändert sich in den Übergangsabschnitten 33 linear von der Permittivität in dem ersten Abschnitt 31 zu der Permittivität in dem zweiten Abschnitt 32.

Um ein erneutes Einkoppeln von in dem Übergangsabschnitten 33 oder in dem zweiten Abschnitt 32 abgestrahlten Moden zu verhindern ist in den Übergangsabschnitten 33 und in dem zweiten Abschnitt 32 ein elektromagnetische Wellen absorbierendes Material 34 ausgebildet.

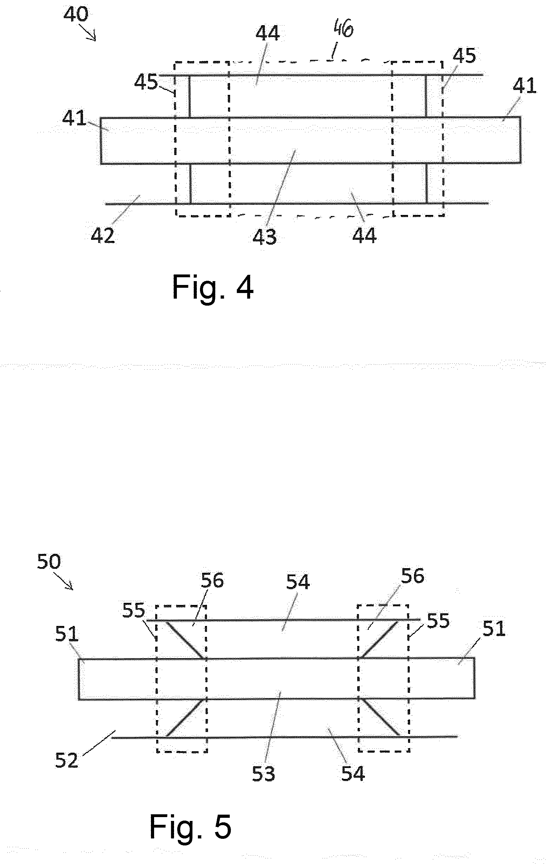

Figur 4 zeigt einen dielektrischen Wellenleiter 40 gemäß einer weiteren Ausführungsform der Erfindung. Der dielektrische Wellenleiter 40 weist eine Hülle 44 auf, die abschnittsweise unterschiedliche Dielektrika aufweist. Der dielektrische Wellenleiter 40 weist einen ersten Abschnitt 41, einen zweiten Abschnitt 46 und Übergangsabschnitte 45 auf. In dem ersten Abschnitt weist der Kern des dielektrischen Wellenleiters 40 eine Permittivität $\varepsilon_r^1$ auf. In dem zweiten Abschnitt 46 weist der Kern 43 eine zweite Permittivität $\varepsilon_r^2$ auf. In dem ersten Abschnitt weist eine den Kern umgebende Hülle 42 eine dritte Permittivität $\varepsilon_r^3$ auf. In dem zweiten Abschnitt weist die den Kern umgebende Hülle 44 eine vierte Permittivität $\varepsilon_r^4$ auf. In den Übergangsabschnitten 45 verändert sich die Permittivität jeweils von $\varepsilon_r^1$ zu $\varepsilon_r^2$ bzw. von $\varepsilon_r^3$ zu $\varepsilon_r^4$ linear.

Dabei sind die Permittivitäten $\varepsilon_r^1$, $\varepsilon_r^2$, $\varepsilon_r^3$, $\varepsilon_r^4$ derart gewählt, dass das Verhältnis von $\varepsilon_r^2$ zu $\varepsilon_r^4$ kleiner ist als das Verhältnis von $\varepsilon_r^1$ zu $\varepsilon_r^3$.

Die Figur 5 zeigt einen dielektrischen Wellenleiter 50 gemäß einer weiteren Ausführungsform der Erfindung. Der dielektrische Wellenleiter 50 weist in dem ersten Abschnitt einen Kern 51 sowie eine Hülle 52 auf. In dem zweiten Abschnitt weist der dielektrische Wellenleiter 50 einen Kern 53 sowie eine Hülle 54 auf. Die Permittivitäten des Kerns bzw. der Hülle in dem ersten bzw. zweiten Abschnitt verhalten sich dabei gemäß Figur 4.

Darüber hinaus weist die Hülle 56 in dem Übergangsabschnitt 55 eine gegenüber dem zweiten Abschnitt verringerte Querschnittsfläche auf, indem sich eine innere Oberfläche der Hülle linear von der äußeren Oberfläche der Hülle zu der äußeren Oberfläche des Kerns 53 verjüngt.

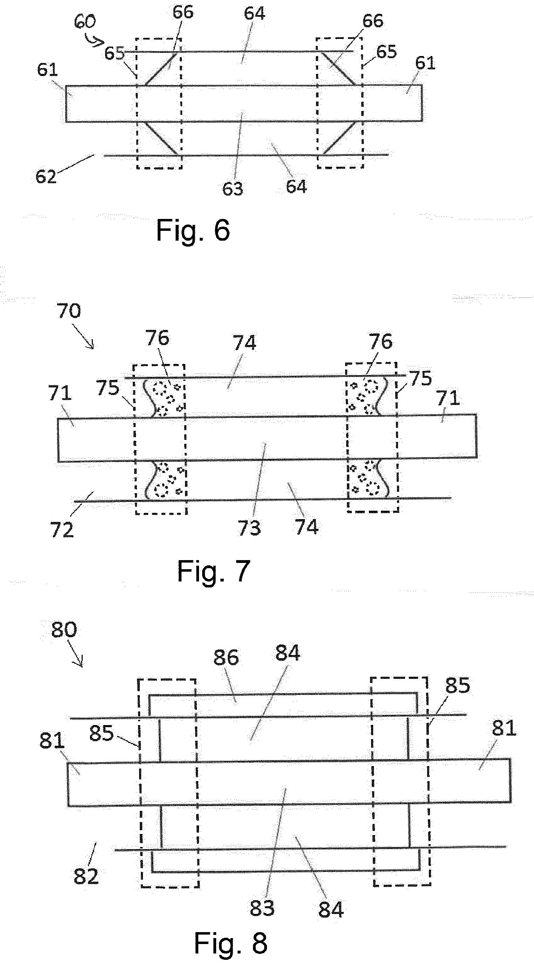

Figur 6 zeigt einen dielektrischen Wellenleiter 60 gemäß einer Ausführungsform der Erfindung. Der Wellenleiter 60 weist in dem ersten Abschnitt einen Kern 61 sowie eine Hülle 62 auf. In dem zweiten Abschnitt weist der dielektrische Wellenleiter 60 einen Kern 63 sowie eine Hülle 64 auf. Die Permittivitäten des Kerns bzw. der Hülle in dem ersten bzw. zweiten Abschnitt verhalten sich dabei gemäß Figur 4.

Darüber hinaus weist die Hülle 66 in dem Übergangsabschnitt 65 eine dem zweiten Abschnitt verringerte Querschnittsfläche auf, indem sich die Querschnittsfläche der Hülle von dem Kern 61 bis zu der äußeren Oberfläche der Hülle 64 linear verbreitert.

Die Figur 7 zeigt einen weiteren dielektrischen Wellenleiter 70 gemäß einer weiteren Ausführungsform der Erfindung. Der Wellenleiter 70 weist in dem ersten Abschnitt einen Kern 71 sowie eine Hülle 72 auf. In dem zweiten Abschnitt weist der Wellenleiter 70 einen Kern 73 sowie eine Hülle 74 auf. Die Permittivitäten des Kerns bzw. der Hülle in dem ersten bzw. zweiten Abschnitt verhalten sich dabei gemäß Figur 4.

Darüber hinaus weist der Wellenleiter 70 eine Hülle mit abschnittsweise verschiedener Permittivität auf, indem die Hülle 76 in dem Übergangsabschnitt 75 eine Dotierung aufweist.

Figur 8 zeigt einen dielektrischen Wellenleiter 80 gemäß einer weiteren Ausführungsform der Erfindung. Der dielektrische Wellenleiter 80 weist in dem ersten Abschnitt einen Kern 81 sowie eine Hülle 82 auf. In dem zweiten Abschnitt weist der Wellenleiter 80 einen Kern 83 sowie eine Hülle 84 auf. Die Permittivitäten des Kerns bzw. der Hülle in dem ersten bzw. zweiten Abschnitt verhalten sich dabei gemäß Figur 4.

Darüber hinaus weist der dielektrische Wellenleiter 80 ein elektromagnetische Wellen absorbierendes Material 86, welches die Hülle 84 umschließt auf, um die in den Übergangsabschnitten 85 abgestrahlten Moden zu absorbieren.

Bezugszeichenliste

10 Wellenleiter
11 erster Abschnitt
12 zweiter Abschnitt
20 Wellenleiter

| | |
|---|---|
| 21 | erster Abschnitt |
| 22 | zweiter Abschnitt |
| 23 | Übergangsabschnitt |
| 24 | elektromagnetisch absorbierendes Material |
| 30 | Wellenleiter |
| 31 | erster Abschnitt |
| 32 | zweiter Abschnitt |
| 33 | Übergangsabschnitt |
| 34 | elektromagnetisch absorbierendes Material |
| 40 | Wellenleiter |
| 41 | Kern |
| 42 | Mantel |
| 43 | Kern |
| 44 | Hülle |
| 45 | Übergangsabschnitt |
| 46 | zweiter Abschnitt |
| 50 | Wellenleiter |
| 51 | Kern |
| 52 | Hülle |
| 53 | Kern |
| 54 | Hülle |
| 55 | Übergangsabschnitt |
| 56 | Hülle |
| 60 | Wellenleiter |
| 61 | Kern |
| 62 | Hülle |
| 63 | Kern |
| 64 | Hülle |
| 65 | Übergangsabschnitt |
| 66 | Hülle |
| 70 | Wellenleiter |
| 71 | Kern |
| 72 | Hülle |
| 73 | Kern |
| 74 | Hülle |
| 75 | Übergangsabschnitt |
| 76 | Hülle |
| 80 | Wellenleiter |
| 81 | Kern |
| 82 | Hülle |
| 83 | Kern |
| 84 | Hülle |
| 85 | Übergangsabschnitt |
| 86 | elektromagnetisch absorbierendes Material |

**Patentansprüche**

1. Dielektrischer Wellenleiter (10; 20; 30; 40; 50; 60; 70; 80) mit wenigstens einer Faser, die wenigstens einen ersten Abschnitt (11; 21; 31) aufweist, welcher eingerichtet ist, ein Signal mit einer maximalen Frequenz, welche kleiner ist als eine erste Grenzfrequenz, zu übertragen und
die wenigstens einen zweiten Abschnitt (12; 22; 32; 46) aufweist, welcher eingerichtet ist, ein Signal mit einer maximalen Frequenz, welche kleiner ist als eine zweite Grenzfrequenz, zu übertragen,
wobei die zweite Grenzfrequenz kleiner ist als eine erste Grenzfrequenz.

2. Dielektrischer Wellenleiter nach Anspruch 1, wobei zwischen dem ersten Abschnitt und dem zweiten Abschnitt ein Übergangsabschnitt (23; 33; 45; 55; 65; 75; 85) ausgebildet ist, in dem sich die Grenzfrequenz kontinuierlich und/oder stufenförmig von der ersten Grenzfrequenz zu der zweiten Grenzfrequenz ändert.

3. Dielektrischer Wellenleiter nach Anspruch 1, wobei sich die Grenzfrequenz in dem zweiten Abschnitt kontinuierlich und/oder stufenförmig von der ersten Grenzfrequenz zu einer zweiten Grenzfrequenz ändert.

4. Dielektrischer Wellenleiter nach Anspruch 2 oder 3, wobei sich die Grenzfrequenz in dem Übergangsabschnitt oder in dem zweiten Abschnitt linear oder nach einem monotonen Teilabschnitt einer Kosinusfunktion ändert.

5. Dielektrischer Wellenleiter nach einem der vorstehenden Ansprüche, wobei die Faser in dem ersten Abschnitt eine Querschnittsfläche aufweist, die größer ist als eine Querschnittsfläche der Faser des zweiten Abschnitts.

6. Dielektrischer Wellenleiter nach Anspruch 5, wobei sich die Faser in dem zweiten Abschnitt und/oder in dem Übergangsabschnitt linear oder nach einem monotonen Teilabschnitt einer Kosinusfunktion verjüngt.

7. Dielektrischer Wellenleiter nach einem der vorstehenden Ansprüche, wobei die Faser in dem ersten Abschnitt eine Permittivität aufweist, die größer ist als eine Permittivität der Faser des zweiten Abschnitts.

8. Dielektrischer Wellenleiter nach Anspruch 7, wobei die Faser in dem zweiten Abschnitt und/oder in dem Übergangsabschnitt dotiert ist und/oder Gaseinschlüsse von einer geringeren Permittivität aufweist.

9. Dielektrischer Wellenleiter nach einem der vorstehenden Ansprüche, welches in dem Bereich des zweiten Abschnittes und/oder des Übergangsabschnittes ein Material, insbesondere in einer die Faser umgebenden Hülle, aufweist, welches eingerichtet ist, elektromagnetische Wellen zu absorbieren.

10. Dielektrischer Wellenleiter nach einem der vorstehenden Ansprüche, welches eine die Faser umgebende Hülle aufweist, wobei ein Permittivitätsverhältnis in dem zweiten Abschnitt und/oder in dem Übergangsabschnitt zwischen einer Permittivität der Faser und einer Permittivität der Hülle kleiner als ein Permittivitätsverhältnis in dem ersten Abschnitt zwischen einer Permittivität der Faser und einer Permittivität der Hülle ist.

11. Dielektrischer Wellenleiter nach einem der vorstehenden Ansprüche, welches eine die Faser umgebende Hülle aufweist, wobei eine Querschnittsfläche der Hülle in dem Übergangsabschnitt und/oder in dem zweiten Abschnitt kleiner ist als eine Querschnittsfläche der Hülle in dem ersten Abschnitt.

12. Dielektrischer Wellenleiter nach Anspruch 11, wobei sich die Querschnittsfläche der Hülle in dem Übergangsabschnitt und/oder in dem zweiten Abschnitt linear verändert.

13. Dielektrischer Wellenleiter nach einem der vorstehenden Ansprüche, wobei die Faser in dem ersten Abschnitt eine Multimodefaser aufweist und die Faser in dem zweiten Abschnitt eine Singlemodefaser aufweist.

14. Dielektrischer Wellenleiter nach einem der vorstehenden Ansprüche, welches einen dritten Abschnitt aufweist, wobei der zweite Abschnitt zwischen dem ersten Abschnitt und dem dritten Abschnitt ausgebildet ist und insbesondere zwischen dem ersten Abschnitt und dem zweiten Abschnitt und/oder zwischen dem zweiten Abschnitt und dem dritten Abschnitt ein Übergangsabschnitt ausgebildet ist.

Fig. 1

Fig. 2

Fig. 3

Fig. 4

Fig. 5

**Fig. 6**

**Fig. 7**

**Fig. 8**

Europäisches
Patentamt

European
Patent Office

Office européen
des brevets

**EUROPÄISCHER RECHERCHENBERICHT**

Nummer der Anmeldung

EP 17 18 7953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/136176 A1 (KOPP VICTOR IL CH [US] ET AL) 28. Mai 2009 (2009-05-28) | 1-6, 11-14 | INV. H01P3/16 |
| A | * Seite 3, Absatz 31 - Seite 4, Absatz 39; Abbildungen 1A, 2A, 2B, 2D * | 7-10 | G02B6/14 G02B6/26 |
| | ----- | | |
| X | JP S56 112621 A (TOKYO SHIBAURA ELECTRIC CO) 5. September 1981 (1981-09-05) | 1-6,9, 11-14 | |
| A | * Abschnitt 3; Seite 100 - Seite 102; Abbildung 2 * | 7,8,10 | |
| | ----- | | |
| X | JP H01 316706 A (SUMITOMO ELECTRIC INDUSTRIES) 21. Dezember 1989 (1989-12-21) | 1-3,5,7, 8,10,11, 13,14 | |
| A | * Abschnitt 3; Seite 27 - Seite 31; Abbildungen 1-3 * | 4,6,9,12 | |
| | ----- | | |
| X | US 2007/081764 A1 (DELIWALA SHRENIK [US]) 12. April 2007 (2007-04-12) | 1-6, 11-14 | |
| A | * Seite 1, Absatz 8 - Seite 3, Absatz 27; Abbildungen 1-3 * | 7-10 | |
| | ----- | | RECHERCHIERTE SACHGEBIETE (IPC) |
| A | US 2006/062518 A1 (GALSTIAN TIGRAN [CA] ET AL) 23. März 2006 (2006-03-23) * Seite 6, Absatz 74; Abbildung 2B * * Seite 4, Absatz 54 - Seite 6, Absatz 69; Abbildung 3A * | 12 | H01P G02B |
| | ----- | | |

Der vorliegende Recherchenbericht wurde für alle Patentansprüche erstellt

| Recherchenort | Abschlußdatum der Recherche | Prüfer |
|---|---|---|
| Den Haag | 14. Februar 2018 | Blech, Marcel |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 7953

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2018

| Im Recherchenbericht angeführtes Patentdokument | Datum der Veröffentlichung | Mitglied(er) der Patentfamilie | Datum der Veröffentlichung |
|---|---|---|---|
| US 2009136176 A1 | 28-05-2009 | KEINE | |
| JP S56112621 A | 05-09-1981 | KEINE | |
| JP H01316706 A | 21-12-1989 | KEINE | |
| US 2007081764 A1 | 12-04-2007 | KEINE | |
| US 2006062518 A1 | 23-03-2006 | KEINE | |

EPO FORM P0461

Für nähere Einzelheiten zu diesem Anhang : siehe Amtsblatt des Europäischen Patentamts, Nr.12/82